# EUROPÄISCHE PATENTSCHRIFT

(11) **EP 2 333 358 B1**
(45) Veröffentlichungstag und Bekanntmachung des Hinweises auf die Patenterteilung: **01.03.2017**
(21) Anmeldenummer: 10014730.5
(22) Anmeldetag: 18.11.2010
(51) Int. Cl.: F16B 39/282, F16B 33/06, F16B 41/00

(54) **Befestigungsvorrichtung**
Attachment device
Dispositif de fixation

(30) Priorität: 09.12.2009 DE 102009057430
(43) Veröffentlichungstag der Anmeldung: 15.06.2011
(73) Patentinhaber: NEDSCHROEF PLETTENBERG GmbH, 58840 Plettenberg (DE)
(72) Erfinder: Ferreau, Oliver, 44799 Bochum (DE); Hirschfeld, Henning, 58840 Plettenberg (DE)
(74) Vertreter: Patentanwälte Dörner & Kötter PartG mbB

(56) Entgegenhaltungen:
- EP-A2- 1 201 946
- EP-A2- 1 270 891
- WO-A1-92/14939
- US-A1- 2004 096 289
- US-A1- 2007 128 003

## Beschreibung

Die Erfindung betrifft eine Vorrichtung zur Befestigung eines Abgaskrümmers an einem Motorblock nach dem Patentanspruch 1.

Die Befestigung eines Abgaskrümmers am Motorblock erfolgt im Allgemeinen durch Verschrauben von Muttern auf im Motorblock eingeschraubte Stiftschrauben. Die eingesetzten Muttern bestehen häufig aus warmfesten Werkstoffen und werden über Gleitscheiben sowohl mechanisch als auch thermisch vom Krümmer entkoppelt. Diese Entkopplung ist erforderlich, da sich der Krümmer thermisch ausdehnt und diese Längenänderung ohne Entkopplung ein Lösen der Schraubverbindung bewirken kann. An Stelle von Gleitscheiben werden oftmals auch Lochleisten eingesetzt, welche der gleichzeitigen Entkopplung mehrerer Muttern dienen.

Nachteilig an den vorbekannten Lösungen ist, dass diese sich in der Montage als aufwendig erweisen. Dieses ist insbesondere durch den Einsatz der separaten Gleitscheiben bedingt.

Hier will die Erfindung Abhilfe schaffen. Der Erfindung liegt die Aufgabe zu Grunde, eine Vorrichtung zur Befestigung eines Abgaskrümmers an einem Motorblock zu schaffen, bei der keine separate Gleitscheibe erforderlich ist. Gemäß der Erfindung wird diese Aufgabe durch die Merkmale des Patentanspruchs 1 gelöst.

Aus der US 2004/0096289 A1 ist ein Mutternkörper mit einer daran unverlierbar angeordneten Scheibe bekannt.

Mit der Erfindung ist eine Vorrichtung zur Befestigung eines Abgaskrümmers einem Motorblock geschaffen, welche keine separate Gleitscheibe erfordert. Bei dieser Lösung wird die Entkopplung der Mutter dadurch erzielt, dass zwischen Mutternkörper und Scheibe ein hoher Reibwert anliegt. Die Scheibe wird dabei von dem Mutternkörper festgehalten. Beim Anziehen des Mutternkörpers ist keine Bewegung zwischen Mutter und Scheibe vorhanden. Gleichzeitig weist die Scheibe an ihrer dem Mutternkörper abgewandten Oberfläche einen geringen Reibwert auf, wodurch eine mechanische Entkopplung des Krümmers zum Motorblock erreicht wird.

Vorteilhaft ist die Scheibe zumindest auf ihrer dem Mutternkörper abgewandten Seite mit einem trocknen Gleitfilm versehen. Hierdurch ist die Entkopplung zwischen Scheibe und Motorblock weiter verbessert.

In Ausgestaltung der Erfindung weist der Mutternkörper ein selbstsicherndes Innengewinde (sogen. "Selflock"-Gewinde) auf. Selflock-Gewinde sind Innengewinde mit einem besonderen Flankenprofil. Sie ermöglichen eine gleichmäßigere Lastverteilung über die einzelnen Gewindegänge als herkömmliche Gewinde und steigern so die Haltbarkeit einer Schraubverbindung insbesondere bei Vibration. Eine Schraubensicherung per Selflock ist nur unter Vorspannkraft wirksam. Durch dieses selbstsichernde Gewinde ist zudem eine erhöhte Reibung zwischen dem Gewinde und einem Gewindebolzen, auf den der Mutternkörper verschraubt wird, bewirkt.

Bevorzugt ist der Mutternkörper mit einer Klemmsicherung versehen. Diese Klemmsicherung wird beispielsweise durch äußere Eindrücke des Mutternkörpers gebildet, durch welche das Mutterngewinde leicht partiell verformt wird. Durch diese Verformung wird das auf den Gewindebolzen einwirkende Drehmoment erhöht, wodurch die Klemmsicherung bewirkt ist. Diese Klemmsicherung bleibt auch im Falle eines Verlustes der Vorspannung wirksam.

In weiterer Ausgestaltung der Erfindung ist die Scheibe als Bördelscheibe ausgebildet und der Mutternkörper weist an seinem der Scheibe zugewandten Ende einen umlaufenden Flansch auf, der von der umlaufenden Bördelkante der Schreibe umschlossen ist. Hierdurch ist eine fertigungstechnisch einfach realisierbare Fixierung der Scheibe an dem Mutternkörper erzielt.

In Weiterbildung der Erfindung ist der Mutternkörper an seiner der Scheibe zugewandten Oberfläche mit einer Sperr-Verzahnung versehen. Hierdurch ist einer Relativbewegung zwischen Mutter und Scheibe weiter entgegengewirkt.

Vorteilhaft ist die Scheibe mit einer Kupferschicht versehen. Hierdurch wird der Reibwert zwischen Mutternkörper und Scheibe weiter erhöht. Alternativ kann die Scheibe auch vollständig aus Kupfer bzw. einer Kupferlegierung hergestellt sein.

In Weiterbildung der Erfindung weist die Scheibe eine Bohrung auf, dessen Durchmesser im Wesentlichen dem Nenndurchmesser des Innengewindes des Mutternkörpers entspricht. Hierdurch ist die Bohrung nur geringfügig größer als die Stiftschraube des Motorblocks, so dass sich die Scheibe am Bolzen abstützen kann.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

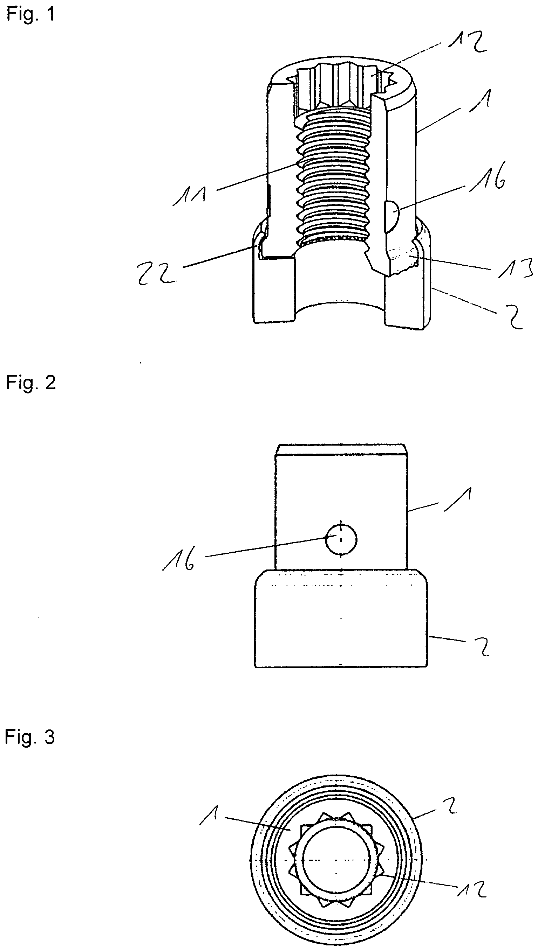

- Fig. 1: die räumliche Darstellung einer Entkopplungsmutter;
- Fig. 2: die Darstellung der Entkopplungsmutter aus Fig. 1 in der Vorderansicht;
- Fig. 3: die Darstellung der Entkopplungsmutter aus Fig. 1 in der Draufsicht;

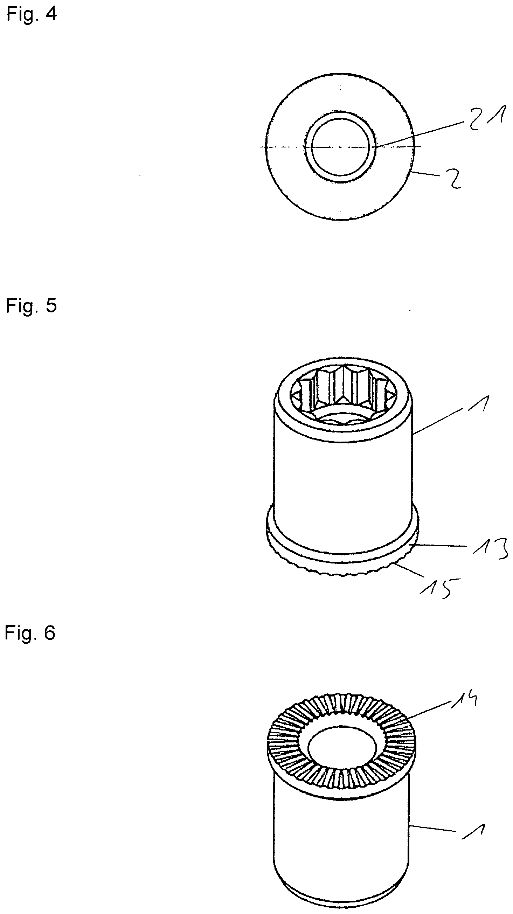

- Fig. 4: die Darstellung der Entkopplungsmutter aus Fig. 1 in der Ansicht von unten;
- Fig. 5: die dreidimensionale Ansicht des Mutternkörpers der Entkopplungsmutter aus Fig. 1;
- Fig. 6: die dreidimensionale Ansicht des Mutternkörpers aus Fig. 5 in der Ansicht von unten;

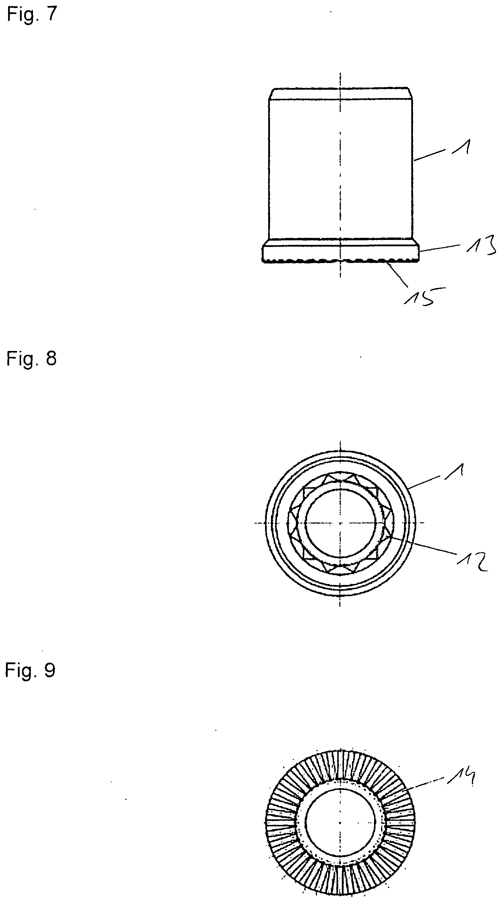

- Fig. 7: die Ansicht des Mutternkörpers aus Fig. 5 in der Ansicht von vorne;
- Fig. 8: der Mutternkörper aus Fig. 5 in der Draufsicht;
- Fig. 9: der Mutternkörper aus Fig. 5 in der Ansicht von unten;

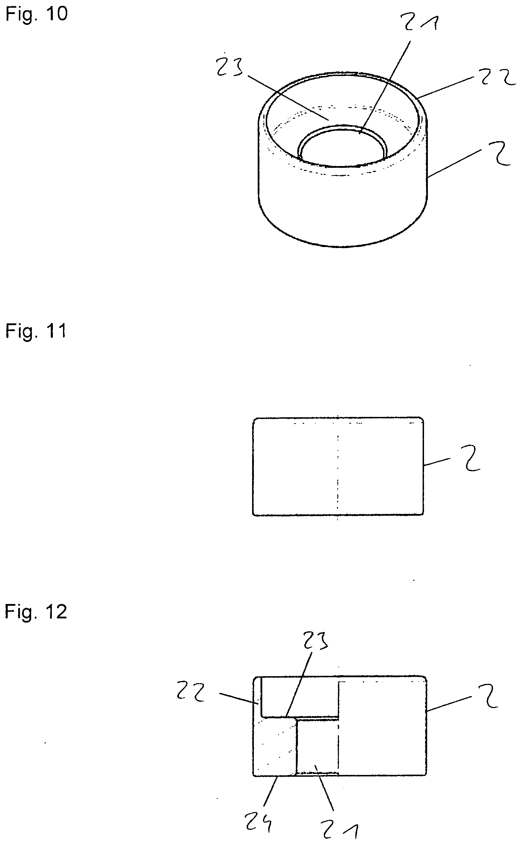

- Fig. 10: die dreidimensionale Ansicht der Bördelscheibe der Entkopplungsmutter aus Fig. 1;
- Fig. 11: die Bördelscheibe aus Fig. 10 in der Ansicht von vorne;
- Fig. 12: die Bördelscheibe aus Fig. 10 in Schnittdarstellung;

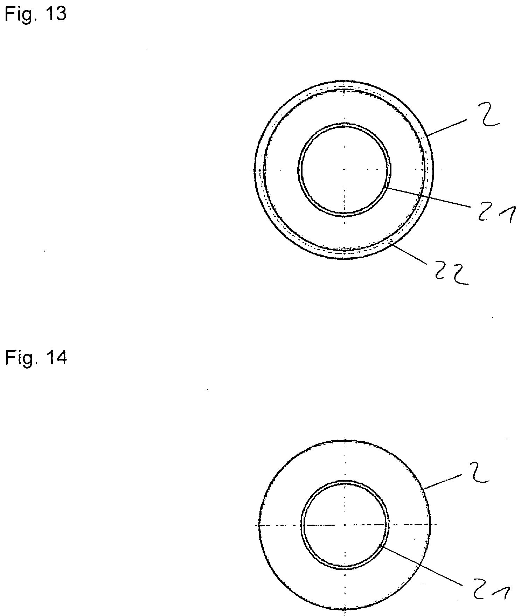

- Fig. 13: die Bördelscheibe aus Fig. 10 in der Draufsicht und
- Fig. 14: die Bördelscheibe aus Fig. 10 in der Ansicht von unten.

Die als Ausführungsbeispiel gewählte Befestigungsvorrichtung - nachfolgend "Entkopplungsmutter" genannt - besteht im Wesentlichen aus einem Mutternkörper 1, an dem eine Bördelscheibe 2 unverlierbar gehalten ist.

Der Mutternkörper 1 ist im Wesentlichen hohlzylindrisch ausgebildet und aus warmfesten Material hergestellt. An seiner Innenwandung ist in den Mutternkörper 1 ein Innengewinde 11 eingebracht, welches an seiner der Scheibe 2 gegenüberliegenden Seite in einen Innenvielkant 12 übergeht. An seinem dem Innenvielkant 12 entgegengesetzten Ende ist an den Mutternkörper 1 umlaufend ein Flansch 13 angeformt, an dessen der Scheibe 2 zugewandten Oberfläche 15 eine Sperrverzahnung 14 eingebracht ist. sind in dem Mutternkörper 1 weiterhin außen umlaufend in regelmäßigen Abständen drei Eindrücke 16 eingebracht, welche der Klemmsicherung des Schraubenkörpers 1 dienen. Im Ausführungsbeispiel ist die Oberfläche 15 des Flansches 13 sowie der Bereich des Innengewindes 11 mit einer Kupferschicht versehen. Die Oberfläche 15 des Flansches 13 ist zudem mit einem trockenen Gleitfilm versehen.

Die Scheibe 2 ist im Ausführungsbeispiel als Bördelscheibe ausgebildet und aus warmfesten Material hergestellt. Mittig ist in der Bördelscheibe eine Bohrung 21 eingebracht, dessen Durchmesser im Wesentlichen dem Nenndurchmesser des Innengewindes 11 des Mutternkörpers 1 entspricht. An ihrer dem Mutternkörper 1 zugewandten Seite weist die Scheibe 2 eine umlaufende Bördelkante 22 auf. Die an die Bördelkante 22 angrenzende Oberfläche 23 der Bördelscheibe 2 sowie die dieser Oberfläche 23 gegenüberliegende Oberfläche 24 sind im Ausführungsbeispiel mit einer Kupferschicht versehen und zusätzlich mit einem trockenen Gleitfilm beschichtet. Dieser Gleitfilm ist verschieden gegenüber dem auf die Oberfläche 15 des Flansches 13 des Mutternkörpers 1 aufgebrachten Gleitfilm. Dabei weist die Scheibe 2 an ihrer dem Mutternkörper 1 abgewandten Oberfläche 24 einen geringeren Reibwert auf, als die Oberfläche 15 des Flansches 13 des Mutternkörpers 1.

Die Scheibe 2 ist derart mit dem Mutternkörper 1 verbunden, dass die mit der Sperrverzahnung 14 versehene Oberfläche 15 des Mutternkörpers 1 auf der Oberfläche 23 der Bördelscheibe aufliegt, wobei die Bördelkante 22 um den Flansch 13 gebördelt ist. Damit bilden Mutternkörper 1 und Scheibe 2 eine Einheit, mit hoher Reibung im Innengewinde 11, hoher Reibung zwischen Mutternkörper 1 und Scheibe 2 sowie geringer Reibung zwischen der Scheibe 2 und einem Krümmer. Die Entkopplungsmutter besteht aus nur zwei Einzelteilen, welche jeweils durch Kaltmassiwerformung hergestellt werden können. Die Einzelteile werden unterschiedlich beschichtet und dann unverlierbar zusammengefügt. Dadurch ist eine kostengünstige Serienfertigung dieser Entkopplungsmutter möglich. Eine solche Entkopplungsmutter ist in der Lage, bei einem Anzugsmoment von 16 Nm Vibrationen mit einer Querverschiebung von 2 mm aufzunehmen, ohne die Vorspannkraft vollständig zu verlieren.

## Patentansprüche

1. Vorrichtung zur Befestigung eines Abgaskrümmers an einem Motorblock, umfassend einen Mutternkörper (1), an dem eine Scheibe (2) unverlierbar angeordnet ist, wobei zwischen Mutternkörper (1) und Scheibe (2) Mittel zur Reibwerterhöhung angeordnet sind und wobei die Scheibe (2) an ihrer dem Mutternkörper (1) abgewandten Oberfläche (24) einen geringeren Reibwert aufweist als die der Scheibe (2) zugewandte Oberfläche (15) des Mutternkörpers (1).

2. Vorrichtung nach Anspruch 1, **dadurch gekennzeichnet, dass** die Scheibe (2) an ihrer dem Mutternkörper (1) zugewandten Oberfläche(23) einen Reibwert aufweist, der geringer ist, als der Reibwert der dieser Scheibe (2) zugewandten Oberfläche (15) des Mutternkörpers (1).

3. Vorrichtung nach einem der Ansprüche 1 oder 2, **dadurch gekennzeichnet,**
**dass** die Scheibe (2) zumindest auf ihrer dem Mutternkörper (24) abgewandten Seite mit einem trockenen Gleitfilm versehen ist.

4. Vorrichtung nach einem der vorgenannten Ansprüche, **dadurch gekennzeichnet, dass** der Mutternkörper (1) ein selbstsicherndes Innengewinde (11) aufweist.

5. Vorrichtung nach einem der vorgenannten Ansprüche, **dadurch gekennzeichnet, dass** der Mutternkörper (1) mit einer Klemmsicherung (16) versehen ist.

6. Vorrichtung nach einem der vorgenannten Ansprüche, **dadurch gekennzeichnet, dass** die Scheibe (2) als Bördelscheibe ausgebildet ist und der Mutternkörper (1) an seinem der Scheibe (2) zugewandten Ende einen umlaufenden Flansch (13) aufweist, der von der umlaufenden Bördelkante (22) der Scheibe (2) umschlossen ist.

7. Vorrichtung nach einem der vorgenannten Ansprüche, **dadurch gekennzeichnet, dass** der Mutternkörper (1) an seiner der Scheibe (2) zugewandten Oberfläche (15) mit einer Sperr-Verzahnung (14) versehen ist.

8. Vorrichtung nach einem der vorgenannten Ansprüche, **dadurch gekennzeichnet, dass** die Scheibe (2) mit einer Kupferschicht versehen ist.

9. Vorrichtung nach einem der vorgenannten Ansprüche, **dadurch gekennzeichnet, dass** die Scheibe (2) eine Bohrung (21) aufweist, dessen Durchmesser im Wesentlichen dem Nenndurchmesser des Innengewindes (11) des Mutternkörpers (1) entspricht.

## Claims

1. Device for attaching an exhaust manifold to an engine block which device has a nut body (1) to which a washer (2) is undetachably arranged and where means of increasing the friction coefficient are arranged between the nut body (1) and the washer (2) and where the washer (2) has a lower friction coefficient at its surface (24) that faces away from the nut body (1) than the surface (15) of the nut body (1) that faces towards the washer (2).

2. Device in accordance with claim 1, **characterised in that** the washer (2) has a lower friction coefficient at its surface (23) that faces towards the nut body (1) than the friction coefficient of the surface (15) of the nut body (1) that faces towards this washer (2).

3. Device in accordance with either claim 1 or claim 2, **characterised in that** the washer (2) is provided with a dry lubricant film on at least its side that faces away from the nut body (24).

4. Device in accordance with any one of the aforementioned claims, **characterised in that** the nut body (1) incorporates a self-locking internal screw thread (11).

5. Device in accordance with any one of the aforementioned claims, **characterised in that** the nut body (1) is provided with a clamp-fastening means (16).

6. Device in accordance with any one of the aforementioned claims, **characterised in that** the washer (2) is constructed as a flanged washer and the nut body (1) incorporates at its end that faces towards the washer (2) an all-round flange (13) that is enclosed by the all-round flange edge (22) of the washer (2).

7. Device in accordance with any one of the aforementioned claims, **characterised in that** the nut body (1) is provided with locking teeth (14) at its surface (15) that faces towards the washer (2).

8. Device in accordance with any one of the aforementioned claims, **characterised in that** the washer (2) is provided with a copper layer.

9. Device in accordance with any one of the aforementioned claims, **characterised in that** the washer (2) is provided with a hole (21) the diameter of which essentially matches the nominal diameter of the internal screw thread (11) of the nut body (1).

## Revendications

1. Dispositif de fixation d'un collecteur de gaz d'échappement contre un bloc moteur, comprenant un corps d'écrou (1) contre lequel une rondelle (2) est condamnée, sachant qu'entre le corps d'écrou (1) et la rondelle (2) sont prévus des moyens pour hausser l'indice de friction, et sachant que la rondelle (2) présente, sur sa surface (24) ne regardant pas le corps d'écrou (1), un indice de friction moins élevé que la surface (15) qui, sur le corps d'écrou (1), regarde la rondelle (2).

2. Dispositif selon la revendication 1, **caractérisé en ce que** la rondelle (2) présente, sur sa surface (23) regardant le corps d'écrou (1), un indice de friction inférieur à l'indice de friction que présente, sur le corps d'écrou (1), la surface (15) regardant cette rondelle (2).

3. Dispositif selon l'une des revendications 1 ou 2, **caractérisé en ce que** la rondelle (2) est munie, au moins sur son côté ne regardant pas le corps d'écrou (24), d'un film sec glissant.

4. Dispositif selon l'une des revendications précédentes, **caractérisé en ce que** le corps d'écrou (1) présente un filetage inférieur (11) autobloquant.

5. Dispositif selon l'une des revendications précédentes, **caractérisé en ce que** le corps d'écrou (1) est muni d'un dispositif de blocage (16).

6. Dispositif selon l'une des revendications précédentes, **caractérisé en ce que** la rondelle (2) est configurée comme une rondelle à collet et que le corps d'écrou (1) présente, en son extrémité regardant la rondelle (2), une bride périphérique (13) ceinturée par le collet périphérique (22) de la rondelle (2).

7. Dispositif selon l'une des revendications précédentes, **caractérisé en ce que** le corps d'écrou (1) est muni d'une denture de blocage (14) à sa surface (15) regardant la rondelle (2).

8. Dispositif selon l'une des revendications précédentes, **caractérisé en ce que** la rondelle (2) est munie d'une couche de cuivre.

9. Dispositif selon l'une des revendications précédentes, **caractérisé en ce que** la rondelle (2) présente un alésage (21) dont le diamètre correspond pour l'essentiel au diamètre nominal du filetage intérieur (11) du corps d'écrou (1).
